# EUROPÄISCHE PATENTSCHRIFT

(11) **EP 1 933 521 B1**
(45) Veröffentlichungstag und Bekanntmachung des Hinweises auf die Patenterteilung: **09.02.2011**
(21) Anmeldenummer: 06026079.1
(22) Anmeldetag: 15.12.2006
(51) Int. Cl.: H04L 29/06, H04L 12/26

(54) **Verfahren zum Analysieren eines Ablaufs einer zwischen mindestens zwei Instanzen ablaufenden Kommunikation und Protokolltester**
Method for the analysis of a communication sequence which runs between at least two entities and a protocol tester
Procédé d'analyse d'un processus de communication se déroulant entre au moins deux instances et un testeur de protocole

(43) Veröffentlichungstag der Anmeldung: 18.06.2008
(73) Patentinhaber: Tektronix International Sales GmbH, 8212 Neuhausen (CH)
(72) Erfinder: McDonald, Martin, 13503 Berlin (DE); Polak, Martin, 13187 Berlin (DE)
(74) Vertreter: Schurack, Eduard F.

(56) Entgegenhaltungen:
- US-A1- 2006 270 409
- ANONYMOUS: "Agilent Optimization of Wireless Networks Using Signaling Analyzer Application Note" INTERNET ARTICLE, [Online] 10. Mai 2006 (2006-05-10), XP002428240 Gefunden im Internet: URL:http://cp.literature.agilent.com/litwe b/pdf/5989-5156EN.pdf> [gefunden am 2007-04-03]
- ANONYMOUS: "XPI Solutions for Mobile/Signaling Signaling Analyzer SW Edition J5486A Data Sheet" INTERNET ARTICLE, [Online] 5. Dezember 2002 (2002-12-05), XP002428241 Gefunden im Internet: URL:http://cp.literature.agilent.com/litwe b/pdf/5988-8334EN.pdf> [gefunden am 2007-04-03]
- ANONYMOUS: "Agilent Signaling Analyzer Technical Overview" INTERNET ARTICLE, [Online] 14. November 2005 (2005-11-14), XP002428242 Gefunden im Internet: URL:http://cp.literature.agilent.com/litwe b/pdf/5989-0347EN.pdf> [gefunden am 2007-04-03]

## Beschreibung

Die vorliegende Erfindung betrifft ein Verfahren zum Analysieren eines Ablaufs einer zwischen mindestens zwei Instanzen ablaufenden Kommunikation, wobei der Kommunikationsablauf eine Abfolge mehrerer Calls umfasst, die ihrerseits mindestens eine Nachricht umfassen, wobei die mindestens eine Nachricht auf einer Anzeigeeinheit durch ein Symbol dargestellt wird und jedem Symbol gemäß einer Defaulteinstellung ein optisches Merkmal zugewiesen wird und wobei eine erste Prozedur mindestens eine erste Nachricht und eine zweite Prozedur mindestens eine zweite Nachricht umfasst und das Auftreten der ersten Nachricht mit einem erfolgreichen oder nicht erfolgreichen Abschluss der ersten Prozedur und das Auftreten der zweiten Nachricht mit einem erfolgreichen oder nicht erfolgreichen Abschluss der zweiten Prozedur korreliert ist. Die Erfindung betrifft überdies einen entsprechenden Protokolltester zum Analysieren eines Ablaufs einer zwischen mindestens zwei Instanzen ablaufenden Kommunikation.

Zum Überwachen von Kommunikationsabläufen, beispielsweise in Mobilfunknetzen, werden bekanntlich Protokolltester eingesetzt. Dabei fallen große Mengen an Daten an, die analysiert werden müssen. Um einem Benutzer die Analyse der aufgezeichneten Daten zu ermöglichen, ist es bekannt, auf einer Anzeigeeinheit, beispielsweise einem Computerbildschirm, einen Kommunikationsablauf betreffende Daten darzustellen. Dabei ist für jeden Call eines Kommunikationsablaufs eine Zeile auf der Anzeigeeinheit vorgesehen, in der Informationen zu diesem Call angezeigt werden. Ein Call umfasst einzelne Protokollmessages, im Folgenden als Nachrichten bezeichnet, und ist im Falle der Übertragung von Sprache als eine Abfolge von Nachrichten vom Verbindungsaufbau bis zum Verbindungsabbau definiert. Im Falle der Übertragung von Daten kann eine Folge von Nachrichten von der Kontextaktivierung bis zur Kontextdeaktivierung als Call dargestellt werden. Außerdem werden eine oder mehrere Kontextaktivierungen durch eine Attach-Prozedur vorbereitet. Diese wird entweder als eigener Call oder in Verbindung mit Kontextaktivierung und -deaktivierung als ein Call dargestellt. Entsprechendes gilt für eine Detach-Prozedur, die dem Beenden einer Datenverbindung dient. Daneben gibt es Nachrichten oder Prozeduren, die weder Sprach-Calls noch Daten-Calls direkt zugeordnet sind und als eigenständige Calls dargestellt werden, beispielsweise Paging-Nachrichten. Um eine Nachrichtenfolge innerhalb einer Zeile darstellen zu können, wird jede Nachricht durch ein Symbol repräsentiert.

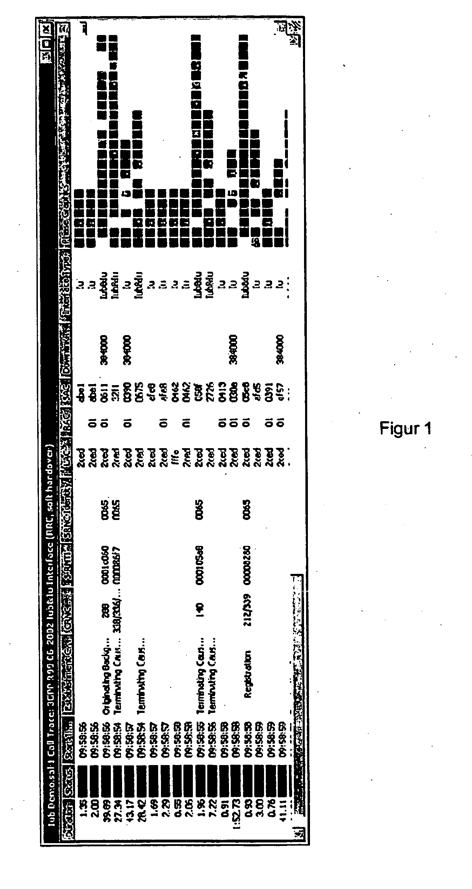

Figur 1 zeigt als Beispiel für diese Art der Darstellung einen Ausschnitt eines Fensters einer grafischen Benutzeroberfläche eines als Agilent Signaling Analyzer bekannten Protokolltesters. Dieses Bild ist der Broschüre "Agilent Signaling Analyzer - Technical Overview" von Agilent Technologies entnommen. In dem mit "Phase Graphics" überschriebenen Bereich des Fensters werden die einzelnen Nachrichten eines Calls durch Kästchen dargestellt, die im Original verschiedene Farben aufweisen, die in Figur 1 als Grauabstufungen zu erkennen sind. Einige Kästchen weisen zusätzlich noch einen Icon auf.

Eine Anwendung des "Agilent signaling analyzer" zur Optimierung eines UMTS-Netzwerks unter Verwendung von aus UTRAN stammenden Daten ist in "Agilent - Optimization of Wireless Networks Using Signaling Analyzer", 1. Oktober 2006, XP002428240, gefunden im Internet: URL:http://cp.literature.agilent.com/litwe b/pdf/5989-5156EN.pdf> beschrieben. Daraus geht hervor, dass bei der Darstellung eines sogenannten "call trace" zur Unzeit auftauchende Nachrichten durch rote Kreuze und "timeouts" durch einen Uhr-Icon repräsentiert werden. Schließlich sei noch auf die Beschreibung des Modells "Signaling Analyzer SW Edition J5486A in XPI Solutions for Mobile/Signaling", 5. Dezember 2002, XP002428241, gefunden im Internet: URL:http://cp.literature.agilent.com/litwe b/pdf/5988-8334EN.pdf> verwiesen. Dort ist offenbart, dass bei der Darstellung eines "call trace" Fehler grafisch hervorgehoben werden.

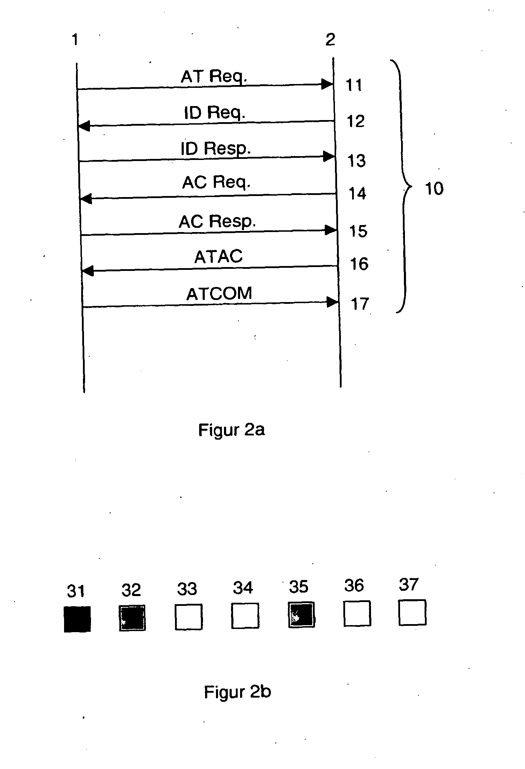

Im Folgenden soll der Zusammenhang zwischen den Nachrichten und den die Nachrichten repräsentierenden Symbolen an einem Beispiel erläutert werden. Figur 2a zeigt einen aus einem Call 10 bestehenden Kommunikationsablauf zwischen einer ersten Instanz 1 und einer zweiten Instanz 2. Dabei entspricht ein Pfeil einer Nachricht. Zuerst sendet die Instanz 1 eine Anfrage "Attach Request" 11 an die Instanz 2. Diese fordert mit einer Nachricht "Identification Request" 12 die Instanz 1 auf, sich zu identifizieren. Darauf antwortet die Instanz 1 mit einer Nachricht "Identification Response" 13. Daraufhin sendet die Instanz 2 eine Nachricht "Authentification and Ciphering Request" 14 an die Instanz 1. Als Antwort sendet die Instanz 1 eine "Authentification and Ciphering Response" 15, um ihre Echtheit zu beweisen. Daraufhin sendet die Instanz 2 eine Nachricht "Attach Accept" 16 als Antwort auf die Nachricht "Attach Request" 11. Die Instanz 1 bestätigt schließlich den Erhalt der Nachricht "Attach Accept" 16 mit einer Nachricht "Attach Complete" 17.

Aus Figur 2b ist zu ersehen, wie diese Nachrichtenfolge gemäß dem Stand der Technik durch Symbole dargestellt wird. Jede der Nachrichten 11 bis 17 wird durch ein Symbol 31 bis 37 in Form eines Kästchens dargestellt, wobei jeder Nachricht eine andere Farbe, die in Figur 2b als Grauabstufung erscheint, gemäß Defaulteinstellung zugewiesen wird. Auf diese Weise lässt sich ein Call 10 in einer Zeile darstellen, so dass in einem Fenster eine Abfolge vieler Calls als so genannter Call-Flow untergebracht werden kann. Aufgrund der großen Datenmengen, ist es für einen Benutzer jedoch weiterhin schwierig, sich schnell einen Überblick über den überwachten Kommunikationsablauf zu verschaffen.

Der vorliegenden Erfindung liegt daher die Aufgabe zu Grunde, ein Verfahren der eingangs genannten Art bereitzustellen, das eine noch einfachere und schnellere Analyse eines Kommunikationsablaufs ermöglicht. Sie besteht weiterhin darin, einen entsprechenden Protokolltester bereitzustellen.

Die erstgenannte Aufgabe wird gelöst durch ein Verfahren mit den Merkmalen von Patentanspruch 1. Gemäß einem weiteren Aspekt der Erfindung wird die zweitgenannte Aufgabe gelöst durch einen Protokolltester mit den Merkmalen von Patentanspruch 10.

Der vorliegenden Erfindung liegt die Erkenntnis zu Grunde, dass einem Benutzer die Analyse eines Kommunikationsablaufs erleichtert werden kann, wenn die Symbole, die die einzelnen Nachrichten darstellen, Auskunft darüber geben, ob eine Prozedur, zu der die Nachrichten gehören, erfolgreich abgeschlossen wurde und welche Nachrichten einer Prozedur angehören. Wie auch aus Figur 2a zu ersehen ist, folgen eine Prozedur bildende Nachrichten innerhalb eines Calls nicht notwendigerweise direkt aufeinander, sondern es können mehrere Prozeduren ineinander verschachtelt sein. Gemäß einem dem Kommunikationsablauf zu Grunde liegenden Standard, beispielsweise dem TS 24.008 von 3 GPP, bilden eine oder mehrere zusammenhängende Nachrichten eine Prozedur. Ein Call kann aus vielen Nachrichten bestehen. Das erschwert es dem Benutzer, den Ablauf eines Calls schnell zu erfassen.

Dadurch, dass die Symbole, die Nachrichten darstellen, die mit einem erfolgreichen oder nicht erfolgreichen Ablauf der zugehörigen Prozedur korreliert sind, ein optisches Merkmal aufweisen, das den Zustand oder Status der zugehörigen Prozedur anzeigt, kann der Benutzer auf den ersten Blick erkennen, ob eine Prozedur erfolgreich abgeschlossen wurde oder ob Fehler aufgetreten sind. Das erlaubt es dem Benutzer, sich auf fehlgeschlagene Calls zu konzentrieren, die üblicherweise bei der Überwachung von Kommunikationsabläufen am Meisten von Interesse sind. Weisen außerdem alle Symbole ein optisches Merkmal auf, das Auskunft über die Zugehörigkeit der durch das Symbol darstellten Nachricht zu einer Prozedur gibt, ist es für den Benutzer erheblich leichter, zu prüfen, ob ein Call ordnungsgemäß abgelaufen ist und im Falle eines fehlgeschlagenen Calls herauszufinden, wo ein Fehler aufgetreten ist. Dadurch wird die Darstellung eines Kommunikationsablaufs noch übersichtlicher. Bei dem optischen Merkmal kann es sich um eine Farbe, eine Grauabstufung, einen Icon oder eine Mnemonik, d. h. ein Buchstabenkürzel, handeln.

Gemäß einer bevorzugten Ausführungsform der Erfindung wird den Symbolen aller zu einer Prozedur gehörenden Nachrichten ein farbiges Feld in derselben Farbe zugewiesen. Durch eine gemeinsame Farbe lässt sich die Zugehörigkeit von Nachrichten zu einer Prozedur besonders einfach erkennen. Alternativ dazu können statt Farben aber auch Grauabstufungen verwendet werden. Bei dem Feld handelt es sich vorzugsweise um ein Quadrat oder ein Rechteck, es kann aber auch eine andere Form haben. Besonders bevorzugt ist, wenn dem Symbol der mit einem erfolgreichen oder nicht erfolgreichen Abschluss einer Prozedur korrelierten Nachricht zusätzlich ein in dem farbigen Feld angeordneter Icon oder eine Mnemonik zugewiesen wird, um den erfolgreichen oder nicht erfolgreichen Abschluss der Prozedur anzuzeigen. Alternativ dazu kann dem Symbol der mit einem erfolgreichen oder nicht erfolgreichem Abschluss der Prozedur ein helleres Farbfeld als den übrigen Nachrichten dieser Prozedur zugewiesen werden.

Gemäß einer alternativen bevorzugten Ausführungsform der Erfindung wird den Symbolen aller zu einer Prozedur gehörenden Nachrichten derselbe Icon oder dieselbe Mnemonik zugewiesen. Besonders bevorzugt ist es, wenn dem Symbol der mit einem erfolgreichen oder nicht erfolgreichen Abschluss einer Prozedur korrelierten Nachricht zusätzlich eine Hintergrundfarbe oder eine Grauabstufung zugewiesen wird, um den erfolgreichen oder nicht erfolgreichen Abschluss der Prozedur anzuzeigen. Alternativ dazu kann der Icon oder die Mnemonik auch selbst in der Farbe oder Grauabstufung gehalten sein.

Zur Darstellung einer Abfolge mehrerer Calls ist es weiterhin vorteilhaft, wenn die zu einem Call gehörenden Nachrichten in einer Zeile dargestellt werden. Dabei ist es besonders vorteilhaft, wenn zu jedem Call, in der die zu dem Call gehörenden Nachrichten enthaltenden Zeile, zusätzliche den Call betreffende Informationen angezeigt werden.

Vorzugsweise öffnet sich auf eine das Symbol einer Nachricht auf der Anzeigeeinheit betreffende Benutzerbetätigung hin automatisch ein zusätzliches Fenster, in dem die einzelnen Nachrichten des Calls aufgeführt sind, zu dem die Nachricht gehört, wobei diese Nachricht in dem Fenster hervorgehoben wird. Bei der Benutzerbetätigung kann es sich um ein Bewegen eines Cursors über das Symbol der Nachricht auf der Anzeigeinheit handeln. Alternativ dazu kann es sich auch um das Bewegen eines Mauszeigers zu dem Symbol in Verbindung mit einem einfachen Anklicken oder einem Doppelklick handeln. Dieses Funktionsmerkmal ermöglicht dem Benutzer eine genauere Analyse eines fehlgeschlagenen Calls.

Die im Zusammenhang mit dem erfindungsgemäßen Verfahren beschriebenen bevorzugten Ausführungsformen und Vorteile gelten, soweit anwendbar, auch für den erfindungsgemäßen Protokolltester.

Im Nachfolgenden wird nunmehr ein Ausführungsbeispiel der Erfindung unter Bezugnahme auf die beigefügten Zeichnungen näher beschrieben. Es zeigen:
- Figur 1: einen Ausschnitt einer grafischen Benutzeroberfläche eines aus dem Stand der Technik bekannten Verfahrens zum Analysieren eines Kommunikationsablaufs;
- Figur 2a: eine Abfolge von zwischen zwei Instanzen ausgetauschten Nachrichten, die einen Call bilden;
- Figur 2b: eine aus dem Stand der Technik bekannte Darstellung des Calls aus Figur 2a durch Symbole;
- Figur 3a: dieselbe einen Call bildende Abfolge von Nachrichten wie in Figur 2a;
- Figur 3b: eine erfindungsgemäße Darstellung des Calls aus Figur 3a durch Symbole;
- Figur 4a: eine der Abfolge aus Figur 3a entsprechende Abfolge von Nachrichten, die einen fehlgeschlagenen Call darstellen; und
- Figur 4b: eine erfindungsgemäße Darstellung des Calls aus Figur 4a durch Symbole.

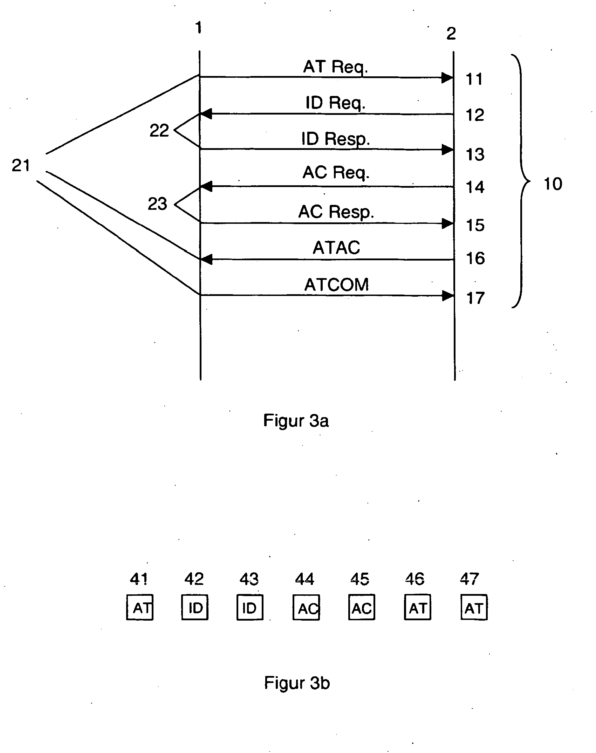

Figur 3a zeigt noch einmal den in Figur 2a dargestellten Call 10, mit der Nachrichtenfolge 1 bis 17. Einander entsprechende Elemente des Standes der Technik und der Erfindung sind in den Zeichnungen mit denselben Bezugszeichen versehen. Aus Figur 3b ist zu ersehen, wie die Nachrichten 11 bis 17 des in Figur 3a gezeigten Calls 10 gemäß einem bevorzugten Ausführungsbeispiel der Erfindung dargestellt werden. Wie beim Stand der Technik ist für jeden Call eine Zeile auf der Anzeigeeinheit vorgesehen. In dieser Zeile können noch weitere den Call betreffende Informationen, wie beispielsweise eine Call-Identifikationsnummer, angezeigt werden. Im Gegensatz zum Stand der Technik wird jedoch gemäß einer Defaulteinstellung den Symbolen ein gemeinsames optisches Merkmal zugeordnet, die die mit einem erfolgreichen oder nicht erfolgreichen Abschluss einer Prozedur korrelierten Nachrichten darstellen, wobei das optische Merkmal den Zustand oder Status der Prozedur anzeigt. Gleichzeitig wird den Symbolen aller zu einer Prozedur gehörenden Nachrichten ein gemeinsames optisches Merkmal zugewiesen, das anzeigt, um welche Prozedur es sich handelt. Insbesondere bilden die in Figur 3a gezeigten Nachrichten "Attach Request" 11, "Attach Accept" 16 und "Attach Complete" 17 eine Prozedur 21. Die diese Nachrichten darstellenden Symbole 41, 46 und 47 werden in Figur 3b durch das Buchstabenkürzel oder die Mnemonik "AT" identifiziert. Außerdem weist das Symbol 47, das die mit einem erfolgreichen Abschluss der Prozedur verbundene Nachricht "Attach Complete" 17 darstellt, einen Grauton auf, der den erfolgreichen Abschluss der Prozedur "Attach" anzeigt. Ebenso bilden die in Figur 3a gezeigten Nachrichten "Identity Request" 12 und "Identity Response" 13 eine Prozedur 22, während die Nachrichten "Authentification and Ciphering Request" 14 und "Authentification and Ciphering Response" 15 eine Prozedur 23 bilden. Die die zur Prozedur 22 gehörenden Nachrichten darstellenden Symbole 42 und 43 sind gemäß Figur 3b zur Angabe der Prozedur mit der Mnemonik "ID" versehen. Bei den die zu der Prozedur 23 gehörenden Nachrichten darstellenden Symbolen 44 und 45 ist die Prozedur durch die Mnemonik "AC" angegeben. Zusätzlich gibt der Grauton, der den Hintergrund der Symbole 43 und 45 bildet, auf dem sich die jeweilige Mnemonik befindet, an, dass die Prozeduren 22 und 23 erfolgreich abgeschlossen wurden. Der Hintergrund der Symbole 41, 42, 44 und 46, die Nachrichten darstellen, die nicht mit einem erfolgreichen oder nicht erfolgreichen Abschluss einer Prozedur zusammen hängen, ist dagegen weiß gelassen.

Noch deutlicher lässt sich der Status der Prozeduren mit einer farbigen Anzeige anstellte von Grauabstufungen darstellen. Beispielsweise können erfolgreich abgeschlossene Prozeduren durch ein grünes Symbol, zurückgewiesene Prozeduren dagegen durch ein rotes Symbol darstellt werden. Prozeduren, bei denen ein anderer Fehler aufgetreten ist, können durch eine weitere auffällige Farbe, wie Magenta, markiert werden.

Die Zugehörigkeit zu einer Prozedur wird in Figur 3b durch Buchstabenkürzel ausgedrückt. Als Alternative können dafür aber auch Icons verwendet werden. Gemäß dem in Figur 3b gezeigten Ausführungsbeispiel befindet sich das Buchstabenkürzel oder die Mnemonik in einem Feld, beispielsweise einem Kästchen oder einem Kreis, mit der entsprechenden Grauabstufung. Alternativ dazu kann aber auch die Mnemonik selbst in der entsprechenden Grauabstufung dargestellt werden.

Bei einem alternativen Ausführungsbeispiel, bei dem zur Kenntlichmachung der Prozedur Farben oder Grauabstufungen verwendet werden, kann der Status der Prozedur durch Icons oder Mnemoniks angezeigt werden. Es kann aber auch ganz auf Icons oder Mnemoniks verzichtet werden und statt dessen die Zugehörigkeit zu einer Prozedur durch Farben ausgedrückt werden, wobei das Symbol das eine mit einem erfolgreichen oder nicht erfolgreichen Abschluss einer Prozedur korrelierte Nachricht darstellt, in Abhängigkeit vom Status der Prozedur heller oder dunkler als die die übrigen zu der Prozedur gehörenden Nachrichten darstellenden Symbole ist.

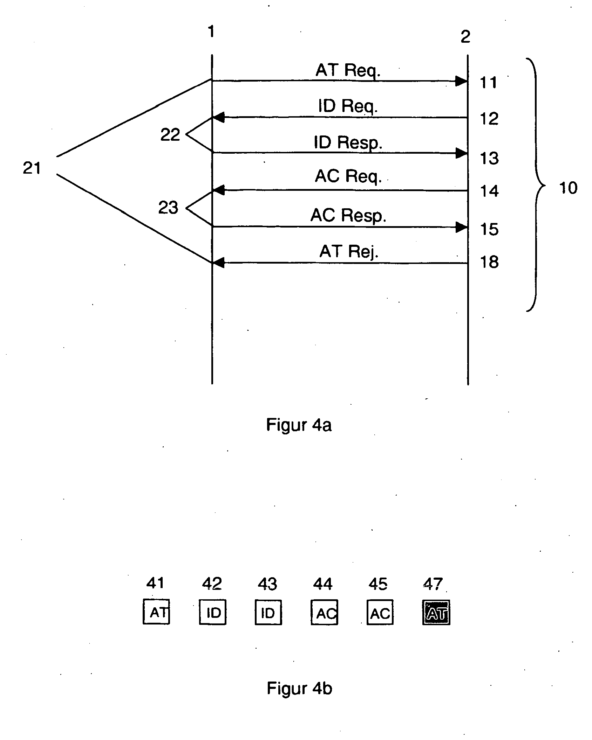

Figur 4a zeigt einen Call, bei dem die Instanz 2 als letzte Nachricht ein "Attach Reject" 18 statt eines "Attach Accept" 16 an die Instanz 1 sendet und die Prozedur "Attach" 21 damit zurückweist. Aus Figur 4b ist die Darstellung des Calls 10 für diesen Fall zu ersehen. Für die Symbole 41 bis 45 stimmt die Darstellung mit der aus Figur 3b überein. Das letzte Symbol 47, das die Nachricht "Attach Reject" 18 darstellt, zeigt durch einen von dem bei den Symbolen 43 und 45 verwendeten Grauton abweichenden Grauton, dass die Prozedur "Attach" 21 nicht erfolgreich abgeschlossen wurde. So kann der Benutzer sofort erkennen, bei welcher Prozedur ein Fehler aufgetreten ist.

Das bevorzugte Ausführungsbeispiel der Erfindung weist außerdem ein weiteres Funktionsmerkmal auf. Bewegt der Benutzer auf der Anzeigeeinheit einen Mauszeiger zu einem eine Nachricht repräsentierenden Symbol, öffnet sich mittels eines Doppelklicks auf das Symbol ein weiteres Fenster, in dem die einzelnen Nachrichten des Calls, zu dem die Nachricht gehört, dargestellt sind. Diese Darstellung kann in einer Form erfolgen, wie sie in den Figuren 2a, 3a und 4a gezeigt ist. Zusätzlich kann die ausgewählte Nachricht beispielsweise durch Fettdruck hervorgehoben sein.

Ein bevorzugtes Ausführungsbeispiel eines erfindungsgemäßen Protokolltesters weist eine Anzeigeeinheit auf, auf der jeweils ein Call aus einer einen zu analysierenden Kommunikationsablauf bildenden Abfolge von Calls in einer Zeile mittels Symbolen gemäß dem erfindungsgemäßen Verfahren darstellbar ist.

## Patentansprüche

1. Verfahren zum Analysieren eines Ablaufs einer zwischen mindestens zwei Instanzen (1, 2) ablaufenden Kommunikation, wobei der Kommunikationsablauf eine Abfolge mehrerer Calls (10) umfasst, die ihrerseits mindestens eine Nachricht (11, ..., 17; 11, ..., 18) umfassen;
wobei die mindestens eine Nachricht (11, ..., 17; 11, ..., 18) auf einer Anzeigeeinheit durch ein Symbol (41, ..., 47) dargestellt wird und jedem Symbol (41, ...,47) gemäß einer Defaulteinstellung ein optisches Merkmal zugewiesen wird;
und wobei eine erste Prozedur (21) mindestens eine erste Nachricht (17; 18) und eine zweite Prozedur (22) mindestens eine zweite Nachricht (13) umfasst und das Auftreten der ersten Nachricht (17; 18) mit einem erfolgreichen oder nicht erfolgreichen Abschluss der ersten Prozedur (21) und das Auftreten der zweiten Nachricht (13) mit einem erfolgreichen oder nicht erfolgreichen Abschluss der zweiten Prozedur (22) korreliert ist;
**dadurch gekennzeichnet,**
**dass** gemäß der Defaulteinstellung den Symbolen (47, 43) der ersten und der zweiten Nachricht bei einem erfolgreichen Abschluss der jeweiligen zugehörigen Prozedur (21, 22) ein erstes optisches Merkmal und bei einem nicht erfolgreichen Abschluss der jeweiligen zugehörigen Prozedur (21, 22) ein zweites optisches Merkmal zugewiesen wird; und
**dass** die erste und die zweite Prozedur (21, 22) jeweils noch mindestens eine weitere Nachricht (11, 16,12) umfassen und in der Defaulteinstellung den Symbolen (41, 46, 47) der Nachrichten (11, 16, 17; 11, 16, 18) der ersten Prozedur (21) zusätzlich ein drittes optisches Merkmal und den Symbolen (42, 43) der Nachrichten (12, 13) der zweiten Prozedur (22) zusätzlich ein viertes optisches Merkmal zugewiesen wird.

2. Verfahren nach Anspruch 1,
**dadurch gekennzeichnet,**
**dass** es sich bei den optischen Merkmalen um eine Farbe, eine Grauabstufung, einen Icon oder eine Mnemonik handelt.

3. Verfahren nach Anspruch 1 oder 2,
**dadurch gekennzeichnet,**
**dass** den Symbolen aller zu einer Prozedur (21, 22, 23) gehörenden Nachrichten ein farbiges Feld in derselben Farbe zugewiesen wird.

4. Verfahren nach Anspruch 3,
**dadurch gekennzeichnet,**
**dass** dem Symbol (43, 45, 47) der mit einem erfolgreichen oder nicht erfolgreichen Abschluss einer Prozedur (21, 22, 23) korrelierten Nachricht (13, 15, 17; 13, 15, 18) zusätzlich ein in dem farbigen Feld angeordneter Icon oder eine Mnemonik zugewiesen wird, um den erfolgreichen oder nicht erfolgreichen Abschluss der Prozedur (21, 22, 23) anzuzeigen.

5. Verfahren nach Anspruch 1 oder 2,
**dadurch gekennzeichnet,**
**dass** den Symbolen aller zu einer Prozedur (21, 22, 23) gehörenden Nachrichten derselbe Icon oder dieselbe Mnemonik zugewiesen wird.

6. Verfahren nach Anspruch 5,
**dadurch gekennzeichnet,**
**dass** dem Symbol (43, 45, 47) der mit einem erfolgreichen oder nicht erfolgreichen Abschluss einer Prozedur (21, 22, 23) korrelierten Nachricht eine Hintergrundfarbe zugewiesen wird, um den erfolgreichen oder nicht erfolgreichen Abschluss der Prozedur (21, 22, 23) anzuzeigen.

7. Verfahren nach einem der vorhergehenden Ansprüche,
**dadurch gekennzeichnet,**
**dass** die zu einem Call (10) gehörenden Nachrichten (11, ..., 17; 11, ..., 18) in einer Zeile dargestellt werden.

8. Verfahren nach Anspruch 7,
**dadurch gekennzeichnet,**
**dass** zu jedem Call (10) in der die zu dem Call (10) gehörenden Nachrichten (11, ..., 17; 11, ..., 18) enthaltenden Zeile zusätzliche den Call (10) betreffende Informationen angezeigt werden.

9. Verfahren nach einem der vorhergehenden Ansprüche,
**dadurch gekennzeichnet,**
**dass** sich auf eine das Symbol (41, ..., 47) einer Nachricht (11, ..., 17; 11, ..., 18) auf der Anzeigeeinheit betreffende Benutzerbetätigung hin ein zusätzliches Fenster automatisch öffnet, in dem die Nachrichten des Calls (10) aufgeführt sind, zu dem die Nachricht (11, ..., 17; 11, ..., 18) gehört, wobei diese Nachricht (11, ..., 17; 11, ..., 18) in dem Fenster hervorgehoben wird.

10. Protokolltester mit
einer Anzeigeeinheit zum Darstellen eines Ablaufs einer zwischen mindestens zwei Instanzen (1, 2) ablaufenden Kommunikation, wobei der Kommunikationsablauf eine Abfolge mehrerer Calls (10) umfasst, die ihrerseits mindestens eine Nachricht (11, ..., 17; 11, ..., 18) umfassen; wobei die mindestens eine Nachricht (11, ..., 17; 11, ..., 18) auf der Anzeigeeinheit durch ein Symbol (41, ..., 47) darstellbar ist und jedem Symbol (41, ..., 47) in einer Defaulteinstellung ein optisches Merkmal zugewiesen ist;
und wobei eine erste Prozedur (21) mindestens eine erste Nachricht (17; 18) und eine zweite Prozedur (22) mindestens eine zweite Nachricht (13) umfasst und das Auftreten der ersten Nachricht (17; 18) mit einem erfolgreichen oder nicht erfolgreichen Abschluss der ersten Prozedur (21) und das Auftreten der zweiten Nachricht (13) mit einem erfolgreichen oder nicht erfolgreichen Abschluss der zweiten Prozedur (22) korreliert ist; **dadurch gekennzeichnet,**
**dass** in der Defaulteinstellung den Symbolen (47, 43) der ersten und der zweiten Nachricht bei einem erfolgreichen Abschluss der jeweiligen zugehörigen Prozedur (21, 22) ein erstes optisches Merkmal und bei einem nicht erfolgreichen Abschluss der jeweiligen zugehörigen Prozedur (21, 22) ein zweites optisches Merkmal zugewiesen ist; und
**dass** die erste und die zweite Prozedur (21, 22) jeweils noch mindestens eine weitere Nachricht (11, 16, 12) umfassen und in der Defaulteinstellung den Symbolen (41, 46, 47) der Nachrichten (11, 16, 17; 11, 16, 18) der ersten Prozedur (21) zusätzlich ein drittes optisches Merkmal und den Symbolen (42, 43) der Nachrichten (12, 13) der zweiten Prozedur (22) zusätzlich ein viertes optisches Merkmal zugewiesen ist.

## Claims

1. A method for analysing a sequence of a communication which runs between at least two entities (1, 2), wherein the communication sequence comprises a sequence of several calls (10), which in turn comprise at least one message (11, ..., 17; 11, ..., 18);
wherein the at least one message (11, ..., 17; 11, ..., 18) is represented on a display unit by a symbol (41, ..., 47), and to each symbol (41, ..., 47) is assigned according to a default setting an optical feature;
and wherein a first procedure (21) comprises at least one first message (17; 18) and a second procedure (22) comprises at least one second message (13) and the occurrence of the first message (17; 18) is correlated with a successful or unsuccessful completion of the first procedure (21), and the occurrence of the second message (13) is correlated with a successful or unsuccessful completion of the second procedure (22);
**characterised in that**
according to the default setting is assigned to the symbols (47, 43) of the first and of the second message for a successful completion of the respective associated procedure (21, 22) a first optical feature, and, for an unsuccessful completion of the respective associated procedure (21, 22), a second optical feature; and
the first and the second procedure (21, 22) each comprise at least one further message (11, 16, 12) and in the default setting to the symbols (41, 46, 47) of the messages (11, 16, 17; 11, 16, 18) of the first procedure (21) is assigned in addition a third optical feature, and to the symbols (42, 43) of the messages (12, 13) of the second procedure (22) in addition a fourth optical feature.

2. The method according to claim 1,
**characterised in that**
the optical features are a colour, a shade of grey, an icon, or a mnemonic.

3. The method according to claim 1 or 2,
**characterised in that**
to the symbols of all messages belonging to a procedure (21, 22, 23) is assigned a coloured field in the same colour.

4. The method according to claim 3,
**characterised in that**
to the symbol (43, 45, 47) of the message (13, 15, 17; 13, 15, 18) correlated with a successful or unsuccessful completion of a procedure (21, 22, 23) is assigned in addition an icon arranged in the coloured field, or a mnemonic to indicate the successful or unsuccessful completion of the procedure (21, 22, 23).

5. The method according to claim 1 or 2,
**characterised in that**
to the symbols of all messages belonging to a procedure (21, 22, 23) is assigned the same icon or the same mnemonic.

6. The method according to claim 5,
**characterised in that**
to the symbol (43, 45, 47) of the message correlated with a successful or unsuccessful completion of a procedure (21, 22, 23) is assigned a background colour to indicate the successful or unsuccessful completion of the procedure (21, 22, 23).

7. The method according to one of the above claims,
**characterised in that**
the messages (11, ..., 17; 11, ..., 18) belonging to a call (10) are represented in one line.

8. The method according to claim 7,
**characterised in that**
for each call (10) in the line containing the messages (11, ..., 17; 11, ..., 18) belonging to the call (10) additional information relating to the call (10) is displayed.

9. The method according to one of the above claims,
**characterised in that**
upon a user activation relating to the symbol (41, ..., 47) of a message (11, ..., 17; 11, ..., 18) on the display unit, an additional window opens automatically, in which the messages of the call (10) to which the message (11, ..., 17; 11, ..., 18) belongs are listed, said message (11, ..., 17; 11, ..., 18) being highlighted in said window.

10. A protocol tester having
a display unit to represent a sequence of a communication taking place between at least two entities (1, 2), wherein the communication sequence comprises a sequence of several calls (10), which in turn comprise at least one message (11, ..., 17; 11, ..., 18);
wherein the at least one message (11, ..., 17; 11, ..., 18) is representable on a display unit by a symbol (41, ..., 47) and to each symbol (41, ..., 47) in a default setting an optical feature is assigned;
and wherein a first procedure (21) comprises at least one first message (17; 18) and a second procedure (22) comprises at least one second message (13) and the occurrence of the first message (17; 18) is correlated with a successful or unsuccessful completion of the first procedure (21), and the occurrence of the second message (13) is correlated with a successful or unsuccessful completion of the second procedure (22);
**characterised in that**
in the default setting to the symbols (47, 43) of the first and the second message is assigned a first optical feature for a successful completion of the respective associated procedure (21, 22) and a second optical feature for an unsuccessful completion of the respective associated procedure (21, 22); and
the first and the second procedure (21, 22) each comprise at least one further message (11, 16, 12) and in the default setting to the symbols (41, 46, 47) of the messages (11, 16, 17; 11, 16, 18) of the first procedure (21) is assigned in addition a third optical feature, and to the symbols (42, 43) of the messages (12, 13) of the second procedure (22) in addition a fourth optical feature.

## Revendications

1. Procédé d'analyse d'un processus de communication, se déroulant entre au moins deux instances (1, 2), moyennant quoi le processus de communication comprend une séquence de plusieurs appels (10), qui comprennent de leur côté au moins un message (11, ..., 17 ; 11, ..., 18) ; moyennant quoi le au moins un message (11, ..., 17 ; 11, ..., 18) est représenté sur une unité d'affichage par un symbole (41, ..., 47) et une caractéristique optique est affectée à chaque symbole (41, ..., 47) conformément à un réglage par défaut
et moyennant quoi une première procédure (21) comprend au moins un premier message (17 ; 18) et une deuxième procédure (22) au moins un deuxième message (13) et l'occurrence du premier message (17 ; 18) est corrélée avec une issue fructueuse ou non fructueuse de la première procédure (21) et l'occurrence du deuxième message (13) avec une issue fructueuse ou non fructueuse de la deuxième procédure (22) ;
**caractérisé en ce**
**que**, conformément au réglage par défaut, une première caractéristique optique est affectée aux symboles (47, 43) du premier et du deuxième message, lors d'une issue fructueuse de la procédure (21, 22) associée respective et, lors d'une issue non fructueuse de la procédure (21, 22) associée respective, une deuxième caractéristique optique et
**que** la première et la deuxième procédure (21, 22) comprennent respectivement encore au moins un autre message (11, 16, 12) et qu'une troisième caractéristique optique est affectée, en plus, dans le réglage par défaut, aux symboles (41, 46, 47) des messages (11, 16, 17 ; 11, 16, 18) de la première procédure (21) et une quatrième caractéristique optique, en plus, aux symboles (42, 43) des messages (12, 13) de la deuxième procédure (22).

2. Procédé suivant la revendication 1,
**caractérisé en ce**
**qu'**il s'agit, dans le cas des caractéristiques optiques, d'une couleur, d'une nuance de gris, d'une icône ou d'un mnémonique.

3. Procédé suivant la revendication 1 ou 2,
**caractérisé en ce**
**qu'**un champ en couleur est affecté, dans la même couleur, aux symboles de tous les messages, rattachés à une procédure (21, 22, 23).

4. Procédé suivant la revendication 3,
**caractérisé en ce**
**qu'**une icône ou un mnémonique, disposé dans le champ en couleur, est affecté, en plus, au symbole (43, 45, 47) du message (13, 15, 17 ; 13, 15, 18), corrélé avec une issue fructueuse ou non fructueuse d'une procédure (21, 22, 23), pour afficher l'issue fructueuse ou non fructueuse de la procédure (21, 22, 23).

5. Procédé suivant la revendication 1 ou 2,
**caractérisé en ce**
**que** la même icône ou le même mnémonique est affecté aux symboles de tous les messages, rattachés à une procédure (21, 22, 23).

6. Procédé suivant la revendication 5,
**caractérisé en ce**
**qu'**une couleur de fond est affectée au symbole (43, 45, 47) du message, corrélé avec une issue fructueuse ou non fructueuse d'une procédure (21, 22, 23), pour afficher l'issue fructueuse ou non fructueuse de la procédure (21, 22, 23).

7. Procédé suivant l'une des revendications précédentes,
**caractérisé en ce**
**que** les messages (11, ..., 17 ; 11, ..., 18), rattachés à un appel (10), sont représentés dans une ligne.

8. Procédé suivant la revendication 7,
**caractérisé en ce**
**qu'**à chaque appel (10), des informations supplémentaires, concernant l'appel (10), sont affichées dans la ligne, qui contient les messages (11, ..., 17 ; 11, ..., 18), rattachés à l'appel (10).

9. Procédé suivant l'une des revendications précédentes,
**caractérisé en ce**
**qu'**une fenêtre supplémentaire s'ouvre automatiquement sur une manoeuvre de l'utilisateur, concernant le symbole (41, ..., 47) d'un message (11, ..., 17 ; 11, ..., 18) sur l'unité d'affichage, dans laquelle sont mentionnés les messages de l'appel (10), auquel est rattaché le message (11, ..., 17 ; 11, ..., 18), moyennant quoi ce message (11, ..., 17 ; 11, ..., 18) est mis en valeur dans la fenêtre.

10. Testeur de protocole avec
une unité d'affichage, destinée à représenter un processus de communication se déroulant entre au moins deux instances (1, 2), moyennant quoi le processus de communication comprend une séquence de plusieurs appels (10), qui comprennent de leur côté au moins un message (11, ..., 17 ; 11, ..., 18), moyennant quoi le au moins un message (11, ..., 17 ; 11, ..., 18) peut être représenté sur l'unité d'affichage par un symbole (41, ..., 47) et une caractéristique optique est affectée à chaque symbole (41, ..., 47) dans un réglage par défaut et moyennant quoi une première procédure (21) comprend au moins un premier message (17 ; 18) et une deuxième procédure (22) au moins un deuxième message (13) et l'occurrence du premier message (17 ; 18) est corrélée avec une issue fructueuse ou non fructueuse de la première procédure (21) et l'occurrence du deuxième message (13) avec une issue fructueuse ou non fructueuse de la deuxième procédure (22), **caractérisé en ce**
**que**, dans le réglage par défaut, une première caractéristique optique est affectée aux symboles (47, 43) du premier et du deuxième message, lors d'une issue fructueuse de la procédure (21, 22) associée respective et, lors d'une issue non fructueuse de la procédure (21, 22) associée respective, une deuxième caractéristique optique et
**que** la première et la deuxième procédure (21, 22) comprennent respectivement encore au moins un autre message (11, 16, 12) et qu'une troisième caractéristique optique supplémentaire est affectée, en plus, dans le réglage par défaut, aux symboles (41, 46, 47) des messages (11, 16, 17 ; 11, 16, 18) de la première procédure (21) et une quatrième caractéristique optique, en plus, aux symboles (42, 43) des messages (12, 13) de la deuxième procédure (22).
